Europäisches Patentamt

European Patent Office

Office européen des brevets

(11) Numéro de publication : **0 500 478 A1**

# (12) DEMANDE DE BREVET EUROPEEN

(21) Numéro de dépôt : **92420051.2**

(22) Date de dépôt : **18.02.92**

(51) Int. Cl.$^5$ : **B26D 7/30**

(30) Priorité : **20.02.91 FR 9102240**

(43) Date de publication de la demande :
**26.08.92 Bulletin 92/35**

(84) Etats contractants désignés :
**AT BE CH DE ES GB IT LI NL**

(71) Demandeur : **ENTREMONT S.A. Société dite:**
**25 Faubourg des Balmettes**
**F-74000 Annecy (FR)**

(72) Inventeur : **Chabrier, Christian**
**Les Besseaux**
**F-74230 Thones (FR)**

(74) Mandataire : **Laurent, Michel et al**
**Cabinet LAURENT et CHARRAS, 20, rue Louis**
**Chirpaz B.P. 32**
**F-69131 Ecully Cedex (FR)**

(54) **Procédé et dispositif pour découper un produit ou une préparation alimentaires et notamment un morceau de fromage selon des tranches de masse constante.**

(57) Ce procédé consiste :

— à determiner les dimensions dudit morceau (3) et à le scanneriser au moins au niveau de l'une de ses faces principales au moyen d'une caméra (20), et à transmettre ces informations à un calculateur (19),

— puis à déterminer la masse du morceau (3) selon une section unitaire dudit morceau par soumission dudit morceau à un flux d'ondes et réception puis comparaison du signal transmis à travers celui-ci à des données de référence, au niveau du calculateur (19) ;

— puis à découper le morceau (3) selon une épaisseur déterminée, en fonction des mesures réalisées précédemment à savoir de dimensions, d'aspect qualitatif et de la masse intégrée des sections unitaires.

FIG.2

EP 0 500 478 A1

Jouve, 18, rue Saint-Denis, 75001 PARIS

L'invention concerne un procédé perfectionné, apte à permettre la découpe de produits et/ou de préparations alimentaires, et notamment de morceaux de fromage selon des tranches de poids constant. Elle concerne également le dispositif destiné a permettre la mise en oeuvre de ce procédé.

Depuis quelque temps déjà, les fromages, et notamment les fromages à pâte pressée cuite, sont commercialisés sous la forme de tranches emballées sous vide ou sous atmosphère neutre, selon différentes catégories de poids, typiquement 100g, 220g, etc... . Ceci est particulièrement vrai pour les différents types de gruyère, Comté, Emmental, Beaufort, etc....

D'un point de vue pratique, les grandes surfaces, et à un degré moindre, les commerçants souhaitent disposer de tranches de poids constant, notamment pour réduire au maximum le temps perdu en gestion du prix, celui-ci étant bien entendu fonction du poids. Par ailleurs, c'est généralement le producteur des tranches qui, pour ces grandes surfaces notamment, emballe les produits sous la marque de distribution avec le prix et le poids imprimés sur lesdits emballages. Ces derniers sont donc également demandeurs de tranches de masse constante.

Or, il s'avère que pour un certain nombre de fromages, et notamment l'Emmental, un nombre de trous plus ou moins importants est réparti et ce de manière aléatoire dans les meules. De la sorte, il est difficile à partir de la seule connaissance des dimensions et du poids total de la meule de définir une densité locale de fromage. En conséquence, il est difficile, voire impossible de procéder à la découpe de tranches de masse constante avec les procédés de découpe traditionnels. En effet, ceux-ci consistent à tout d'abord découper des longes d'épaisseur constante à partir de la meule, après avoir ôté les talons. Chacune des longes est ensuite déposée sur un convoyeur à avance contrôlée, entraînant la longe au niveau d'une lame-guillotine animée d'un mouvement alternatif perpendiculaire au convoyeur, produisant les tranches à chaque avancée d'un pas du convoyeur. On obtient de la sorte des tranches d'épaisseur certes visée, mais de densité variable compte-tenu de la répartition aléatoire des trous. Pour des dimensions déterminées de tranches, on obtient typiquement des fourchettes de poids,dont l'écart type est de l'ordre de 15 grammes, soit environ 10 à 15 % en masse, ce qui n'est pas acceptable pour'une bonne rentabilité.

En outre, de manière pratique, les tranches sont généralement expédiées dans des colis dont le poids doit être constant. Cela implique donc, un tri manuel et visuel pour aboutir au poids de colis le plus proche possible du poids de référence lorsque l'on part de tranches de masse variable d'où, une diminution de productivité et une limitation des cadences incompatibles avec une recherche permanente de rentabilité par les producteurs.

L'invention vise à pallier ces différents inconvénients. Elle propose un procédé apte à permettre la découpe de morceaux de fromage, et de manière plus générale de produits et/ou de préparations alimentaires, selon des tranches de masse constante. Plus spécifiquement, elle vise un procédé pour déterminer en continu, une valeur représentative de la quantité de matière au niveau d'un morceau du produit ou de la préparation et ce, sur toute l'épaisseur dudit morceau.

Ce procédé se <u>caractérise</u>, en ce qu'il consiste :
- à déterminer les dimensions dudit morceau et à le scanneriser au moins au niveau de l'une de ses faces principales au moyen d'une caméra, et à transmettre ces informations à un calculateur,
- puis à déterminer la densité du morceau selon une section unitaire dudit morceau :
   . en soumettant ce morceau à un flux d'ondes hyperfréquences ;
   . en captant le signal transmis à travers le morceau soumis à ce flux d'ondes,
   . en transformant le signal capté en un signal analogique ou numérique, susceptible d'être traité ultérieurement par un calculateur, puis en comparant le signal ainsi transformé au niveau du calculateur à un signal de référence stocké dans la mémoire dudit calculateur,
   . et enfin, en déduisant de cette comparaison la valeur représentative de la densité dudit morceau ;
- puis à découper le morceau selon une épaisseur déterminée, en fonction des mesures réalisées précédemment à savoir de dimensions, d'aspect qualitatif et de la densité intégrée des sections unitaires.

En d'autres termes, l'invention consiste à déterminer la masse le plus précisément possible au niveau d'une section d'analyse du morceau, la masse de la totalité dudit morceau étant obtenue par intégration de ces sections sur la longueur totale du morceau soumise au flux d'ondes.

De manière avantageuse, le flux d'ondes électromagnétique est un rayonnement appartenant au domaine des hyperfréquences.

On connaissait de par le document US-A-4 208 933 un procédé permettant de réaliser la découpe de tranches de viande, et notamment de bacon de masse constante. Ce procédé fait appel à une source radioactive, typiquement du Césium 137, dont le rayonnement gamma est dirigé en direction du morceau de viande destiné à être tranché. Un détecteur capte alors le rayonnement ayant traversé ce morceau, et transmet ses mesures à un système d'imagerie, propre à restituer le profil dudit morceau. Néanmoins, un tel dispositif, faisant appel au traitement de l'imagerie, ne permet pas d'obtenir la densité d'une tranche tenant compte des variations locales soit d'aspect, soit de densité. De la sorte, il s'avère tout à fait impropre pour l'obtention de tranches de masse constante, de produits à fortes variations locales de densité et d'aspect, tels que notamment l'Emmental.

Le procédé de l'invention consiste donc à déterminer pour chacun des morceaux à trancher, l'épaisseur desdites tranches en fonction d'une part des dimensions desdits morceaux, de son aspect ou de son image-qualité, et enfin et surtout de la détermination section par section de la masse dudit morceau, la masse de l'épaisseur visée correspondant à l'intégration linéaire de la masse de chacune des sections élémentaires.

Par aspect ou image-qualité du morceau, on entend par exemple pour un morceau d'Emmental, le nombre, la répartition et la surface totale occupée par les trous par rapport à la surface totale de l'une des faces principales dudit morceau. Cette donnée permet ainsi de caractériser la famille à laquelle appartient le morceau à découper, et ainsi de sélectionner le paramètrage au niveau du calculateur pour optimiser l'exactitude de la détermination de la masse de chaque section unitaire.

Selon une variante avantageuse de l'invention, on mesure en amont de la découpe le poids de chacun des morceaux, afin également de sélectionner la famille correspondant au morceau à découper.

Selon une variante avantageuse de l'invention, on soumet les tranches ainsi découpées à une pesée consécutive, afin d'éliminer les tranches dont la masse est située hors de la fourchette autorisée qui pourrait éventuellement être réalisée malgré les mesures effectuées avant sa réalisation.

L'invention concerne enfin le dispositif pour réaliser la découpe d'un morceau d'un produit ou d'une préparation, et notamment d'un morceau de fromage en tranches de masse constante, selon le procédé décrit précédemment. Ce dispositif comprend :

– un convoyeur primaire des morceaux à trancher, à avance contrôlée,

– une lame de découpe à mouvement alternatif perpendiculaire par rapport au convoyeur primaire, agissant à l'extrémité de ce dernier, et actionnée par un moteur indépendant dudit convoyeur,

– un convoyeur secondaire de réception et d'acheminement des tranches découpées vers le lieu d'emballage et de stockage, situé en aval du convoyeur secondaire.

Ce dispositif se caractérise en ce qu'il comprend, en outre :

– un émetteur d'ondes hyperfréquentes situé au dessus du convoyeur primaire, en amont de la lame de découpe,

– un capteur approprié des ondes transmises à travers ledit morceau, situé sous le convoyeur primaire en regard de l'émetteur,

– un organe calculateur apte à corréler les signaux captés avec la masse d'une section analysée du morceau, associé audit capteur, et délivrant des signaux au moteur de commande du convoyeur primaire en fonction de cette corrélation.

Dans une variante avantageuse de l'invention, ce dispositif comprend également au niveau ou en amont du convoyeur primaire une caméra destinée à déterminer les dimensions et l'aspect qualitatif du morceau à découper. Ces dimensions et l'image-qualité sont alors transmises à l'organe calculateur.

Dans une autre version avantageuse de l'invention, le dispositif comprend également au niveau ou en amont du convoyeur un organe de pesée, destiné à déterminer le poids des morceaux à découper, et à transmettre cette information à l'organe calculateur.

Dans une autre variante, le convoyeur secondaire est associé à un organe de pesée, destiné à détecter la masse des tranches découpées, en vue éventuellement de diriger les tranches de masse hors fourchette en d'autres lieux de stockage que les tranches de masse attendue.

La manière dont l'invention peut-être réalisée et les avantages qui en découlent ressortiront mieux de l'exemple de réalisation qui suit, donné à titre indicatif et non limitatif à l'appui des figures annexées.

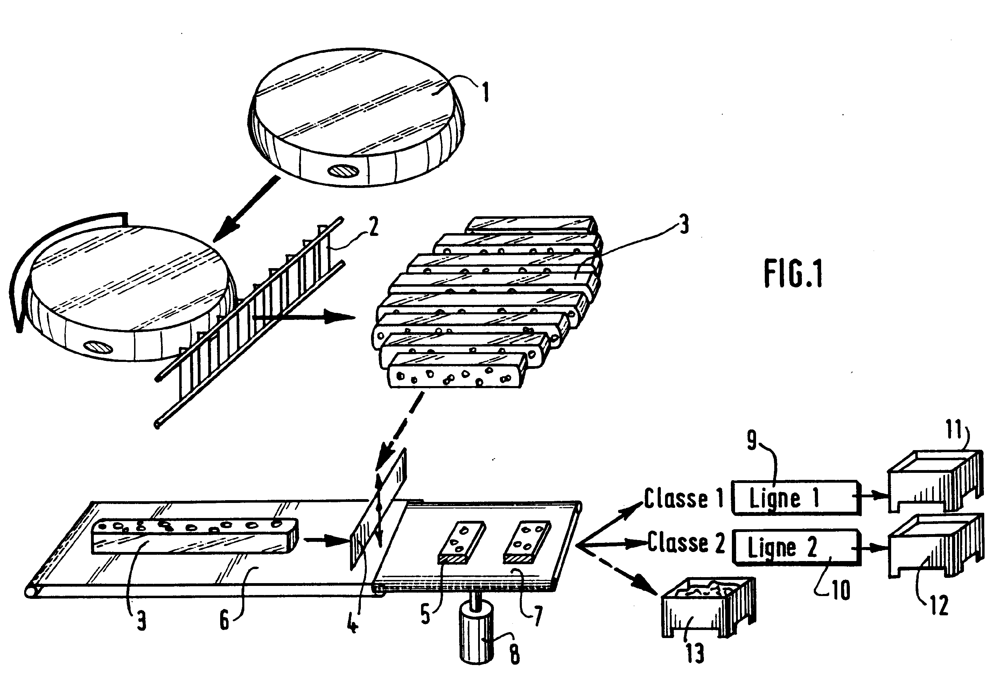

La figure 1 est une représentation schématique du procédé traditionnel de découpe de meules de fromage.

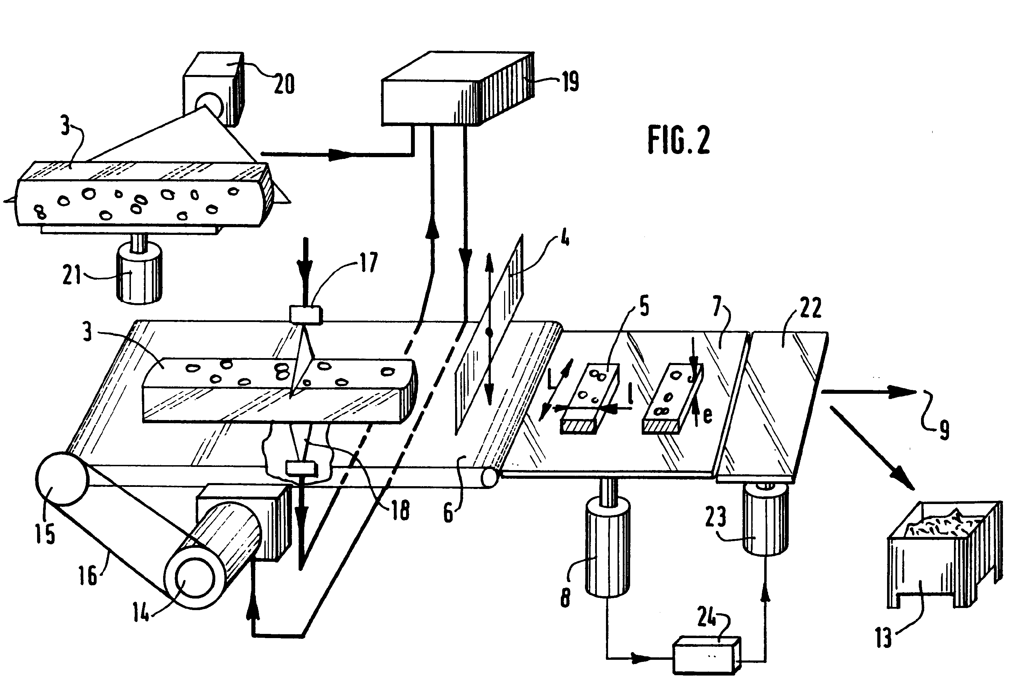

La figure 2 est une représentation schématique de l'installation pour la mise en oeuvre du procédé conforme à l'invention.

La figure 3 est une représentation graphique du signal d'ondes hyperfréquentes capté après absorption dans le morceau de fromage, en fonction du lieu de la mesure, c'est à dire, sur toute la largeur d'une longe.

La description qui suit concerne plus spécifiquement la découpe de meules d'Emmental. Toutefois, il est clair que l'invention ne saurait se limiter à cette seule application, et que la découpe de tout autre fromage, voire de produits ou de préparations alimentaires, est couverte par la portée de l'invention.

Traditionnellement, les meules d'Emmental, de forme circulaire sont soumises, après une période d'affinage, à une découpe (2) selon des longes (3) d'égale épaisseur. Traditionnellement, les deux talons issus de cette découpe sont escamotés, en vue notamment de production de fromage râpé par exemple.

Chacune de ces longes (3), dont la longueur varie de l'une à l'autre, compte-tenu de la forme circulaire de la meule, est alors soumise à une découpe dans le sens de sa largeur au moyen d'une lame guillotine (4) à déplacement vertical alternatif, produisant ainsi des tranches (5) d'épaisseur visée. Pour ce faire, les longes (3) sont posées une à une sur un convoyeur (6), typiquement réalisé en PVC alimentaire, et dont l'avance est commandée par un moto-réducteur, avantageusement contrôlé par impulsions électriques. En d'autres termes, l'épaisseur de chaque tranche correspond à l'avance d'un pas du convoyeur (6), la longueur du pas étant elle-même fonction du nombre d'impulsions reçues par le moteur. On conçoit de la sorte que l'on peut régler l'épaisseur des tranches en faisant varier le nombre d'impulsions envoyées au moto-réducteur de commande d'avance du convoyeur (6).

Les tranches (5) sont réceptionnées sur un convoyeur secondaire (7), associé en outre à un organe de pesée (8), destiné à déterminer la masse de chacune des tranches prédécoupées. En fonction de la mesure effectuée, les tranches (5) sont envoyées à l'une ou l'autre des deux lignes d'emballage représentées respectivement sous les références (9) et (10), au niveau desquelles, les tranches sont scellées dans un film thermoplastique de qualité alimentaire, au sein desquels le vide est réalisé. Les tranches ainsi emballées sont stockées dans des containeurs respectifs (11 et 12), en vue soit d'un nouveau stockage en chambre froide par exemple, soit d'un acheminement direct aux lieux de commercialisation.

En outre, les deux extrémités de chacune des longes, formant talon, sont dirigées quant à elles vers un bac (13) ainsi que les tranches hors normes. De manière traditionnelle, toutes les tranches et les talons dirigés vers ce bac sont destinés à être tranformés en râpé, voire à être fondu et commercialisé sous la forme de portions de fromage fondu.

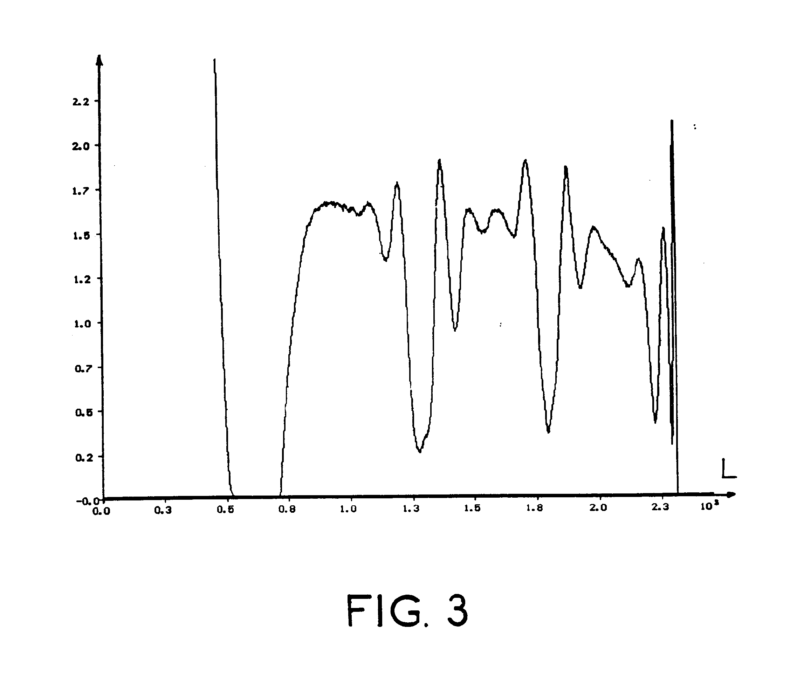

Selon une caractéristique fondamentale de l'invention, on soumet la longe lorsqu'elle est en position sur le convoyeur (6) à un rayonnement hyperfréquence perpendiculairement à son déplacement, et ce, selon une section unitaire correspondant à la surface d'action dudit rayonnement hyperfréquent au niveau de la longe, et sur toute la largeur L̲ des dites longes. Ce rayonnement hyperfréquence est émis au moyen d'un émetteur (17) traditionnel. Le rayonnement transmis à travers la longe est capté sous le convoyeur (6) par un capteur (18), par exemple constitué par une antenne, ce capteur étant associé à un organe de transformation des signaux captés en signaux analogiques, voire numériques. On a représenté sur la figure 3 la variation en unité arbitraire du signal capté en fonction du lieu d'analyse de la longe, c'est à dire tout au long d'une largeur de longe. On peut ainsi observer et déterminer par le biais du calculateur l'importance, notamment volumique des trous, ceux-ci étant matérialisés sur le graphe par des brutales dépressions.

Ces signaux ainsi transformés sont transmis à un calculateur (19), typiquement constitué par une carte électronique, destiné à comparer le spectre obtenu à des spectres de référence, stockés dans sa mémoire, en vue de déterminer à l'issue de cette comparaison la masse de la section unitaire analysée. De la sorte, on peut tenir compte pour une épaisseur considérée de la répartition aléatoire des trous de l'Emmental. Ce faisant, l'épaisseur l̲ des longes étant préalablement introduites dans le calculateur, et l'épaisseur de la tranche à découper étant déterminée par intégration sur une pluralité de sections unitaires analysées, le calculateur émet en direction du moteur (14) de commande de l'avance du convoyeur (6) le nombre d'impulsions nécessaires pour obtenir un poids fixe et constant des tranches (5) découpées. En d'autres termes, le moteur (14), par l'intermédiaire d'un rouleau d'entraînement (15) et d'une courroie (16), induit un déplacement de la longe au niveau de la lame guillotine (4), afin de réaliser la découpe d'une tranche de masse connue et déterminée.

Dans une forme de réalisation particulièrement avantageuse, chacune des longes (3) subit préalablement à son positionnement sur le convoyeur (6), ou même lorsqu'elle arrive sur ce dernier, une scannérisation par une caméra (20), destinée à mesurer ses dimensions à savoir, sa longueur et son épaisseur L̲. En outre, on peut également associer au convoyeur (6) un organe de pesage (21) destiné à déterminer le poids de chacune des longes. Ces différentes données sont transmises également au calculateur (19), qui les stocke. En outre, la scannérisation de chacune des longes (3) par la caméra, permet d'associer chacune d'elles à une famille de longes, dont les caractéristiques dimensionnelles et qualitatives sont préalablement définies, afin de sélectionner au niveau du calculateur les paramètres susceptibles d'optimiser l'exactitude de la mesure consécutive de la masse des sections unitaires. De la sorte, après détermination de la masse de chacune des sections analysées, on obtient des tranches découpées (5) de poids fixe.

Néanmoins, et afin d'optimiser le procédé, les tranches découpées (5) sont soumises à une pesée au niveau du convoyeur secondaire (7), qui induit, par le biais de l'organe de commande (24) et d'un vérin (23), le maintien ou l'abaissement d'un convoyeur tertiaire (22) en vue, soit de diriger les tranches vers les lignes d'emballage et de stockage, soit d'abaisser le convoyeur tertiaire (22) afin de détourner les tranches découpées (5) vers le bac de réception (13) des morceaux hors normes.

Le procédé et le dispositif conformes à l'invention permettent donc d'obtenir des tranches découpées et emballées de masse constante, ce que l'on ne savait obtenir jusqu'alors. En outre, ils permettent d'optimiser les cadences d'emballage et d'étiquetage, induisant une augmentation de la rentabilité des unités de production.

## Revendications

**1/** Procédé pour découper un morceau de produit ou de préparation alimentaires, et notamment un morceau de fromage en tranches (5) de masse constante, **caractérisé** en ce qu'il consiste :

- à déterminer les dimensions dudit morceau (3) et à le scanneriser au moins au niveau de l'une de ses faces principales au moyen d'une caméra (20), et à transmettre ces informations à un calculateur (19),
- puis à déterminer la densité du morceau (3) selon une section unitaire dudit morceau :
  - . en soumettant ce morceau (3) à un flux d'ondes hyperfréquences ;
  - . en captant le signal transmis (18) à travers le morceau soumis à ce flux d'ondes, en transformant le signal capté en un signal analogique ou numérique, susceptible d'être traité ultérieurement par un calculateur (19),
  - . puis en comparant le signal ainsi transformé au niveau du calculateur à un signal de référence stocké dans la mémoire dudit calculateur,
  - . et enfin, en déduisant de cette comparaison la valeur représentative de la densité dudit morceau ;
- puis à découper le morceau (3) selon une épaisseur déterminée, en fonction des mesures réalisées précédemment à savoir de dimensions, d'aspect qualitatif et de la densité intégrée des sections unitaires.

**2/** Procédé selon la revendication 1, caractérisé en ce que les morceaux (3) sont préalablement pesés avant leur découpe, la valeur mesurée étant transférée au calculateur (19), afin d'induire au niveau de celui-ci la sélection des paramètres susceptibles d'optimiser l'exactitude de la détermination de la masse des sections unitaires analysées d'un même morceau par sélection en fonction de cette donnée et des données dimensionnelles et qualitatives dudit morceau de la famille à laquelle il appartient.

**3/** Procédé selon l'une des revendications 1 et 2, caractérisé en ce que les tranches découpées (5) sont pesées, afin d'éliminer les tranches dont la masse est située hors de la fourchette fixée dans le calculateur (19).

**4/** Dispositif pour réaliser la découpe d'un morceau de produit ou d'une préparation alimentaires, et notamment d'un morceau de fromage selon des tranches de masse constante, comprenant :

- un convoyeur primaire (6) des morceaux à trancher (3), à commande contrôlée (14),
- une lame de découpe (4) à mouvement alternatif perpendiculaire par rapport au convoyeur (6), agissant à l'extrémité de ce dernier, et actionnée par un moteur indépendant dudit convoyeur,
- un convoyeur secondaire (7) de réception et d'acheminement des tranches découpées (5) vers le lieu d'emballage et de stockage (9,10), situé en aval du convoyeur secondaire (7),

**caractérisé** en ce qu'il comprend, en outre :

- un émetteur (17) d'ondes hyperfréquences situé au dessus du convoyeur primaire (6), en amont de la lame de découpe (4),
- un capteur (18) des ondes transmises à travers le morceau (3), situé sous le convoyeur primaire (6) en regard de l'émetteur (17),
- un organe calculateur (19) apte à corréler les signaux captés avec la densité du morceau, associé audit capteur (18), et délivrant des signaux au moteur de commande (14) du convoyeur primaire (6) en fonction de cette corrélation, afin d'induire un déplacement dudit convoyeur d'un pas dont la longueur est fonction de la masse mesurée et de la masse désirée des tranches (5).

**5/** Dispositif selon la revendication 4 , caractérisé en ce qu'il comprend également une caméra (20) destinée à déterminer les dimensions du morceau (3) à découper, ainsi que l'aspect qualitatif de l'une des faces principales, puis à transmettre les dimensions ainsi mesurées à l'organe calculateur (19).

**6/** Dispositif selon l'une des revendications 4 et 5, caractérisé en ce que le convoyeur'secondaire (7) est associé à un organe de pesée (8), destiné à mesurer la masse des tranches découpées, afin de diriger les tranches (5) de masse située hors d'une fourchette fixée préalablement au niveau du calculateur, en d'autres lieux de stockage (13) que ceux des tranches de masse située dans ladite fourchette.

**7/** Dispositif selon l'une des revendications 4 à 6, caractérisé en ce que le convoyeur primaire (6) est associé à un organe de pesée (21), destiné à mesurer la masse des morceaux (3) à découper, et à transmettre les mesures ainsi réal'isées à l'organe calculateur (19).

FIG.1

EP 0 500 478 A1

Classe 1 — Ligne 1
Classe 2 — Ligne 2

FIG.2

EP 0 500 478 A1

# FIG. 3

EP 0 500 478 A1

Office européen des brevets

**RAPPORT DE RECHERCHE EUROPEENNE**

Numero de la demande

EP    92 42 0051

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,Y | US-A-4 208 933 (SKIDMORE)<br>* colonne 2, ligne 7 – ligne 11 *<br>* colonne 2, ligne 24 – ligne 43 *<br>* colonne 3, ligne 49 – colonne 5, ligne 35;<br>figures 1,3 *<br>--- | 1-7 | B26D7/30 |
| Y | FR-A-2 632 098 (CERISY S.A.)<br>* page 11, ligne 26 – page 15, ligne 20;<br>revendications 1-3; figures *<br>--- | 1-7 | |
| A | GB-A-1 376 747 (MOLINS LTD)<br>* page 1, ligne 50 – page 3, ligne 99; figures *<br><br>----- | 1,4 | |
| | | | **DOMAINES TECHNIQUES RECHERCHES (Int. Cl.5 )**<br><br>B26D<br>G01N |

Le présent rapport a été établi pour toutes les revendications

| Lieu de la recherche | Date d'achèvement de la recherche | Examinateur |
|---|---|---|
| LA HAYE | 29 AVRIL 1992 | BARROW J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................
& : membre de la même famille, document correspondant

EPO FORM 1503 03.82 (P0402)

9